# EUROPEAN PATENT SPECIFICATION

(11) **EP 2 644 574 B1**
(45) Date of publication and mention of the grant of the patent: **13.08.2014**
(21) Application number: 13161277.2
(22) Date of filing: 27.03.2013
(51) Int. Cl.: C02F 1/52, C02F 1/66, C02F 101/20, C02F 3/12

(54) **Method and plant for treating waste water to eliminate selenium**
Verfahren und Vorrichtung zur Wasserbehandlung und Entfernung von Selenium
Procédé et Installation pour le traitement de l'eau et l'élimination du Sélénium

(30) Priority: 28.03.2012 IT MI20120502
(43) Date of publication of application: 02.10.2013
(73) Proprietor: Tirreno Power S.p.A., 00187 Roma RM (IT)
(72) Inventor: TRUSSI, Albino, 20155 Milano MI (IT); COLAPRICO, Alessandro, 17100 Savona SV (IT); RABELLINO, Giampaolo, 17100 Savona SV (IT)
(74) Representative: Concone, Emanuele

(56) References cited:
- US-A1- 2007 114 185

## Description

The present invention relates to a method and a plant for treating waste water to eliminate selenium, and in particular for treating waste water from coal-fired power plants.

It is known that in many industrial processes the treatment of waste water can be a serious problem, especially with respect to certain parameters such as selenium that are not retained, totally or partially, by the treatment systems traditionally used such as clari-flocculation, sulphurisation, etc.

Selenium is a heavy metal that in the current legislation applicable in Italy has an emission limit value to be drained in surface waters and into the sewer which is very low (0,03 mg/l) and on which no exceptions are permitted. Furthermore, selenium is an element that is not seized in traditional systems with clari-flocculation at pH 9 and is not sensitive to treatment with sulphides, both organic and inorganic. Some effectiveness is attributed to clari-flocculation at pH 7 with ferric chloride and polyelectrolyte, but the effectiveness of this method is only acceptable for selenium in the form Se^{IV} while the treatment is completely ineffective for selenium in the form Se^{VI} which is the most present in the processes that provide for an oxidation of the liquid.

The problem of the elimination of selenium is very important especially in processes that use coal since said element is present to a greater or smaller extent depending on the type of coal used. In addition, the waste water produced by desulphurization plants of coal-fired power plants contains mostly Se^{VI} as a result of oxidation of the slurry in order to produce chemical gypsum.

Another known method, effective on all forms of selenium, is to cause the evaporation of waste water and collect the crystals of the substances dissolved therein to dispose of them properly. It is immediately evident that such a method is very expensive, therefore unsuitable for the treatment of the large volumes of waste water produced by a coal-fired power plant.

The object of the present invention is therefore to provide a method and a plant that overcome the aforesaid drawbacks. This object is achieved by means of a method in two stages, and of a relative plant that implements it, wherein in the first stage the waste water is alkalinised with consequent formation of sludge (consisting mainly of calcium sulphate and hydroxides) that is separated from the supernatant liquid, which is additioned in the second stage with an acid and a barium-based product to completely abate the sulphates present in the liquid coming from the first stage and simultaneously abate through co-precipitation also the selenium present therein, so that the supernatant liquid resulting from this second stage can be filtered and possibly sent to a further plant for waste water treatment to eliminate the remaining pollutants.

The main advantage of the method and plant according to the present invention is that of achieving the desired elimination of selenium to levels below the legal limits in a relatively simple and inexpensive way, with adequate effectiveness regardless of the form and amount of selenium present in the treated waste water (which may be either fresh water or salt water) and therefore also irrespective of the type of coal used in thermal power plants to which the plant can be associated.

Another significant advantage of this method stems from the fact that by using in the second stage barium sulphide (BaS) as a product for the removal of selenium it is also possible to simultaneously obtain the removal of other heavy metals (e.g. cadmium, mercury, chromium and lead) that usually require a specific separate treatment for their elimination, thereby reducing the cost and complexity of waste water treatment.

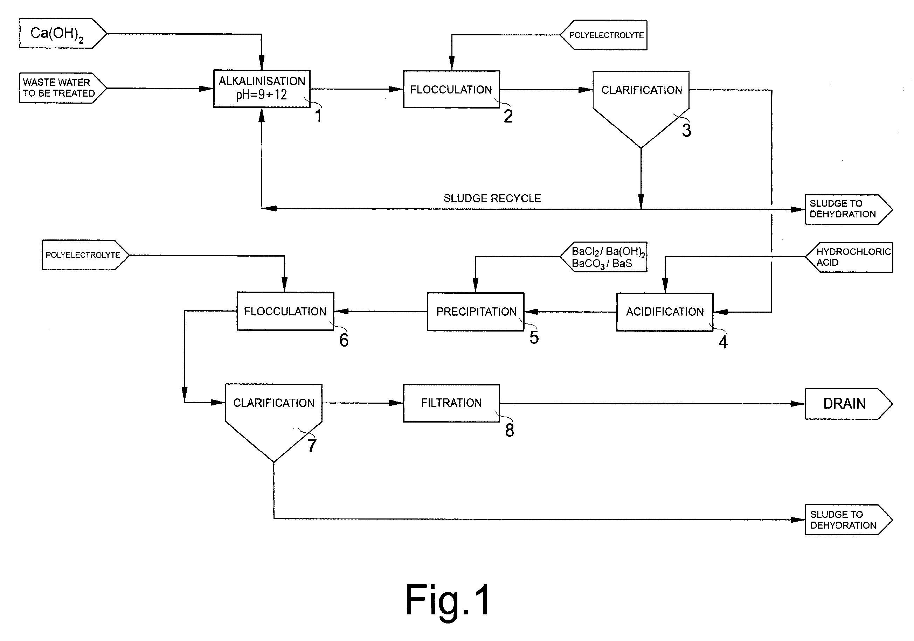

Further advantages and characteristics of the present invention will become apparent to those skilled in the art from the following detailed and non-limiting description of an embodiment thereof, illustrated schematically in the only figure 1.

Figure 1 shows a plant for the treatment of waste water according to the invention comprising, as previously mentioned, an alkalinisation tank 1 in which the waste water to be treated is additioned with ventilated hydrated lime to alkalinise it up to a pH between 9 and 12 with the purpose of abating its temporary hardness and the sulphates present therein. At these pH values the sulphates precipitate in insoluble products, substantially calcium sulphate, up to the solubility product which is about 2000 ppm for calcium sulphate.

The slurry thus obtained is then additioned in a first flocculation tank 2 with a polyelectrolyte in order to facilitate the subsequent clarification of water in a first solid/liquid separation system 3 such as a clarifier, a lamellar pack settler or the like. The sludge extracted from the first clarification system 3 will be in a quantity proportional to the quantity of sulphates present in the treated waste water, and will substantially all sent to a dehydration system although a portion thereof can be recycled to the alkalinisation tank 1.

This first stage of the plant will therefore comprise also some auxiliary systems (not shown) for the preparation and/or storage and/or dosage of lime milk in tank 1 and of polyelectrolyte in tank 2, for the dehydration of the sludge, for the measurement and adjustment of the pH, by intervening on the dosage of the lime, as well as for measuring the content of residual sulphates in the supernatant liquid leaving the first clarification system 3 for the subsequent dosage of the barium-based product.

Before the addition of said product, the liquid coming from the first stage of the plant must be subjected to a correction of the pH, preferably with hydrochloric acid, in an acidification tank 4 to bring its pH to appropriate values that vary as a function of the product employed as selenium precipitant:
- barium chloride: BaCl₂ pH = 2-9
- barium hydroxide Ba(OH)₂ pH = 2-9
- barium carbonate: BaCO₃ pH = 2-6
- barium sulphide: BaS pH = 6-9

After this phase of acidification, where "acidification" means the addition of an acid even if the resulting pH is still alkaline, the liquid is transferred to a precipitation tank 5 where it is additioned with the desired barium-based product in a quantity of approximately 5-10 g/l in relation to the content of residual sulphates to be removed.

The slurry thus obtained is then treated in a second flocculation tank 6 with a polyelectrolyte in order to facilitate the subsequent clarification of water in a second solid/liquid separation system 7 such as a clarifier, a lamellar pack settler or the like. The sludge extracted from the second clarification system 7 is sent to a dehydration system while the supernatant liquid is preferably passed through a filtration system 8 (e.g. sand filters) to optimize the yield, and finally drained or transferred, if necessary, to another treatment plant to remove any further pollutants.

Obviously, also this second stage of the plant will therefore comprise some auxiliary systems (not shown) for the preparation, storage and dosage of the hydrochloric acid in tank 4, of the barium-based product (starting from a product that is solid or in solution) in tank 5 and of the polyelectrolyte in tank 6, all three tanks being equipped with agitators. Systems are also provided for the dehydration of the sludge, for the measurement and adjustment of the pH by acting on the dosage of hydrochloric acid, and to monitor the level of selenium in the treated liquid sent to the filtration system 8.

The method for the elimination of selenium implemented by the above-described plant can therefore be summarized in the following steps:
a) alkalinisation of the waste water up to a pH between 9 and 12 preferably by means of ventilated hydrated lime;
b) flocculation of the slurry thus obtained, preferably by means of a polyelectrolyte;
c) clarification of the slurry with separation into a sludge and a supernatant liquid and dehydration of said sludge;
d) acidification of said supernatant liquid, preferably by means of hydrochloric acid;
e) addition to the acidified liquid of a barium-based product selected among barium chloride, barium hydroxide, barium carbonate and barium sulphide;
f) flocculation of the slurry thus formed, preferably by means of a polyelectrolyte;
g) clarification of the slurry with separation into a sludge and a supernatant liquid and dehydration of said sludge;
h) filtration of said supernatant liquid, preferably by means of sand filters.

It is clear that the above-described and illustrated embodiment of the plant and of the method according to the invention is just an example susceptible of various modifications. In particular, the substances used in the steps of alkalinisation, acidification and flocculation may vary depending on the specific composition of the waste water to be treated according to the common knowledge of a person skilled in the art, and similarly the various devices that make up the system can be replaced with other technically equivalent devices.

## Claims

1. Method for treating waste water to eliminate selenium, said method comprising the following steps:
a) alkalinisation of the waste water up to a pH between 9 and 12, preferably by means of ventilated hydrated lime;
b) flocculation of the slurry thus obtained, preferably by means of a polyelectrolyte;
c) clarification of the slurry with separation into a sludge and a supernatant liquid, and dehydration of said sludge;
d) acidification of said supernatant liquid, preferably by means of hydrochloric acid;
e) addition to the acidified liquid of a barium-based product selected among barium chloride, barium hydroxide, barium carbonate and barium sulphide;
f) flocculation of the slurry thus obtained, preferably by means of a polyelectrolyte;
g) clarification of the slurry with separation into a sludge and a supernatant liquid, and dehydration of said sludge.

2. Method according to claim 1, **characterized in that** in the acidification step d) the liquid is taken to a pH between 2 and 9 when barium chloride or barium hydroxide is added in step e), is taken to a pH between 2 and 6 when barium carbonate is added in step e) and is taken to a pH between 6 and 9 when barium sulphide is added in step e).

3. Method according to claim 1 or 2, **characterized in that** it further includes a filtration step h), preferably by means of sand filters, of the supernatant liquid resulting from step g).

4. Plant for treating waste water to eliminate selenium, **characterized in that** it includes an alkalinisation tank (1), a first flocculation tank (2) connected to the outlet of said alkalinisation tank (1), a first clarification system (3) connected to the outlet of said first flocculation tank (2), an acidification tank (4) connected to the supernatant liquid outlet of said first clarification system (3), a precipitation tank (5) connected to the outlet of said acidification tank (4), a second flocculation tank (6) connected to the outlet of said precipitation tank (5), a second clarification system (7) connected to the outlet of said second flocculation tank (6), sludge dehydration systems connected to the sludge outlets of said clarification systems (3, 7), auxiliary systems for detecting the pH and the sulphates content of slurry and auxiliary systems for the preparation and/or storage and/or dosage of the substances to be fed to said tanks (1, 2, 4, 5, 6) to carry out the respective steps a), b), d), e) f) of a treatment to eliminate selenium according to any of claims 1 to 3.

5. Plant according to claim 4, **characterized in that** it further includes a filtration system (8) connected to the supernatant liquid outlet of the second clarification system (7).

6. Plant according to claim 4 or 5, **characterized in that** it further includes a connection between the sludge outlet of the first clarification system (3) and the alkalinisation tank (1).

7. Plant according to any of claims 4 to 6, **characterized in that** it further includes a system for monitoring the selenium content of the supernatant liquid leaving the second clarification system (7).

## Patentansprüche

1. Verfahren zur Behandlung von Abwasser zum Eliminieren von Selen, wobei das besagte Verfahren die folgenden Schritte umfasst:
a) Alkalisieren des Abwassers bis auf einen pH-Wert zwischen 9 und 12, vorzugsweise vermittels belüftetem Kalkhydrat;
b) Ausflocken der solchermaßen erhaltenen Aufschlämmung, vorzugsweise vermittels eines Polyelektrolyten;
c) Klären der Aufschlämmung unter Trennung in einen Schlamm und eine darüber stehende Flüssigkeit, und Dehydrieren des besagten Schlamms;
d) Ansäuern der besagten, darüber stehenden Flüssigkeit, vorzugsweise vermittels Salzsäure;
e) Zugeben eines Produkts auf Bariumbasis, ausgewählt aus Bariumchlorid, Bariumhydroxid, Bariumkarbonat und Bariumsulfid, zu der angesäuerten Flüssigkeit;
f) Ausflocken des solchermaßen erhaltenen Schlamms, vorzugsweise vermittels eines Polyelektrolyten;
g) Klären der Aufschlämmung unter Trennung in einen Schlamm und eine darüber stehende Flüssigkeit, und Dehydrieren des besagten Schlamms.

2. Verfahren nach Anspruch 1, **dadurch gekennzeichnet, dass** in dem Ansäuerungsschritt d) die Flüssigkeit auf einen pH-Wert zwischen 2 und 9 eingestellt wird, wenn in dem Schritt e) Bariumchlorid oder Bariumhydroxid zugegeben wird, auf einen pH-Wert zwischen 2 und 6 eingestellt wird, wenn in dem Schritt e) Bariumkarbonat zugegeben wird, und einen pH-Wert zwischen 6 und 9 eingestellt wird, wenn in dem Schritt e) Bariumsulfid zugegeben wird,

3. Verfahren nach Anspruch 1 oder 2, **dadurch gekennzeichnet, dass** es ferner einen Filtrierschritt h), vorzugsweise vermittels Sandfiltern, für die aus dem Schritt g) resultierende, darüber stehende Flüssigkeit umfasst.

4. Anlage zur Behandlung von Abwasser zum Eliminieren von Selen, **dadurch gekennzeichnet, dass** sie einen Alkalisationsbehälter (1) aufweist, einen ersten, an den Auslass des besagten Alkalisationsbehälters angeschlossenen Flokkulationsbehälter (2), ein erstes, an den Auslass des besagten, ersten Flokkulationsbehälters (2) angeschlossenes Klärsystem (3), einen an den Auslass des besagten, ersten Klärsystems (3) für die darüber stehende Flüssigkeit angeschlossenen Ansäuerungsbehälter (4), einen an den Auslass des besagten Ansäuerungsbehälters (4) angeschlossenen Ausfällungsbehälter (5), einen zweiten, an den Auslass des besagten Ausfällungsbehälters (5) angeschlossenen Flokkulationsbehälter (6), ein zweites, an den Auslass des besagten, zweiten Flokkulationsbehälters (6) angeschlossenes Klärsystem (7), an die Schlammauslässe der besagten Klärsysteme (3, 7) angeschlossene Schlammdehydriersysteme, Hilfssysteme zum Erkennen des pH-Wertes und des Sulfatanteils des Schlamms sowie Hilfssysteme für das Zubereiten und/oder Speichern und/oder Dosieren von in die besagten Behälter (1, 2, 4, 5, 6) einzuleitenden Substanzen, um die Schritte a), b), d), e) beziehungsweise f) der Behandlung zum Eliminieren von Selen gemäß einem der Ansprüche 1 bis 3 auszuführen.

5. Anlage nach Anspruch 4, **dadurch gekennzeichnet, dass** sie ferner ein Filtrationssystem (8) aufweist, das an den Auslass des zweiten Klärsystems (7) für die überstehende Flüssigkeit angeschlossen ist.

6. Anlage nach Anspruch 4 oder 5, **dadurch gekennzeichnet, dass** sie ferner eine Verbindung zwischen dem Schlammauslass des ersten Klärsystems (3) und dem Alkalisationstank aufweist.

7. Anlage nach einem der Ansprüche 4 bis 6, **dadurch gekennzeichnet, dass** sie ferner ein System aufweist zur Überwachung des Selengehalts der überstehenden Flüssigkeit, welche das zweite Klärsystem (7) verlässt.

## Revendications

1. Procédé pour traiter les eaux usées afin d'éliminer le sélénium, ledit procédé comprenant les étapes suivantes consistant à :
a) alcaliniser les eaux usées jusqu'à un pH compris entre 9 et 12, de préférence au moyen de chaux hydratée ventilée ;
b) floculer la pâte ainsi obtenue, de préférence au moyen d'un polyélectrolyte ;
c) clarifier la pâte en la séparant en une boue et en un surnageant, et hydrater ladite boue ;
d) acidifier ledit surnageant, de préférence au moyen d'acide chlorhydrique ;
e) ajouter au liquide acidifié, un produit à base de baryum choisi parmi le chlorure de baryum, l'hydrate de baryum, le carbonate de baryum et le sulfure de baryum ;
f) floculer la pâte ainsi obtenue, de préférence au moyen d'un polyélectrolyte ;
g) clarifier la pâte en la séparant en une boue et en un surnageant, et hydrater ladite boue.

2. Procédé selon la revendication 1, **caractérisé, en ce que**, à l'étape d'acidification d), le liquide est porté à un pH compris entre 2 et 9 lorsque le chlorure de baryum ou l'hydrate de baryum est ajouté à l'étape e), est porté à un pH compris entre 2 et 6 lorsque le carbonate de baryum est ajouté à l'étape e) et est porté à un pH compris entre 6 et 9 lorsque le sulfure de baryum est ajouté à l'étape e).

3. Procédé selon la revendication 1 ou 2, **caractérisé en ce qu'**il comprend en outre une étape consistant à filtrer h), de préférence au moyen de filtres à sable, le surnageant provenant de l'étape g).

4. Installation pour traiter les eaux usées afin de d'éliminer le sélénium, **caractérisée en ce qu'**elle comprend un réservoir d'alcalinisation (1), un premier réservoir de floculation (2) raccordé à la sortie dudit réservoir d'alcalinisation (1), un premier système de clarification (3) raccordé à la sortie dudit premier réservoir de floculation (2), un réservoir d'acidification (4) raccordé à la sortie de surnageant dudit premier système de clarification (3), un réservoir de précipitation (5) raccordé à la sortie dudit réservoir d'acidification (4), un premier réservoir de floculation (6) raccordé à la sortie dudit réservoir de précipitation (5), un second système de clarification (7) raccordé à la sortie dudit second réservoir de floculation (6), des systèmes de déshydratation de boue raccordées aux sorties de boue desdits systèmes de clarification (3, 7), des systèmes auxiliaires pour détecter le pH et la teneur en sulfate de la pâte et des systèmes auxiliaires pour la préparation et/ou le stockage et/ou le dosage des substances à amener auxdits réservoirs (1, 2, 4, 5, 6) pour réaliser les étapes a), b), d), e), f) respectives d'un traitement afin d'éliminer le sélénium selon l'une quelconque des revendications 1 à 3.

5. Installation selon la revendication 4, **caractérisée en ce qu'**elle comprend en outre un système de filtration (8) raccordé à la sortie de surnageant du second système de clarification (7).

6. Installation selon la revendication 4 ou 5, **caractérisée en ce qu'**elle comprend en outre un raccordement entre la sortie de boue du premier système de clarification (3) et le réservoir d'alcalinisation (1).

7. Installation selon l'une quelconque des revendications 4 à 6, **caractérisée en ce qu'**elle comprend en outre un système pour surveiller la teneur en sélénium du surnageant sortant du second système de clarification (7).
